# EUROPEAN PATENT SPECIFICATION

(11) **EP 2 100 684 B1**
(45) Date of publication and mention of the grant of the patent: **30.04.2014**
(21) Application number: 09003540.3
(22) Date of filing: 11.03.2009
(51) Int. Cl.: B23D 45/04, B23D 47/12

(54) **Bench cutter**
Tischschneider
Scie pour banc

(30) Priority: 11.03.2008 JP 2008061809; 09.03.2009 JP 2009055541
(43) Date of publication of application: 16.09.2009
(73) Proprietor: Hitachi Koki CO., LTD., Tokyo 108-6020 (JP)
(72) Inventor: Imamura, Ryuuichi, Hitachinaka-shi, Ibaraki 312-8502 (JP); Ozawa, Hiromi, Hitachinaka-shi, Ibaraki 312-8502 (JP); Tajima, Masayuki, Hitachinaka-shi, Ibaraki 312-8502 (JP); Kawada, Hirohide, Hitachinaka-shi, Ibaraki 312-8502 (JP)
(74) Representative: Strehl Schübel-Hopf & Partner

(56) References cited:
- DE-C1- 4 106 636
- JP-A- 9 183 101
- US-A1- 2006 101 967
- US-A1- 2006 266 186

## Description

### BACKGROUND

### 1. Field

The present invention relates to a bench cutter. The preamble of claim 1 is based on US 2006/0101967.

### 2. Description of the Related Art

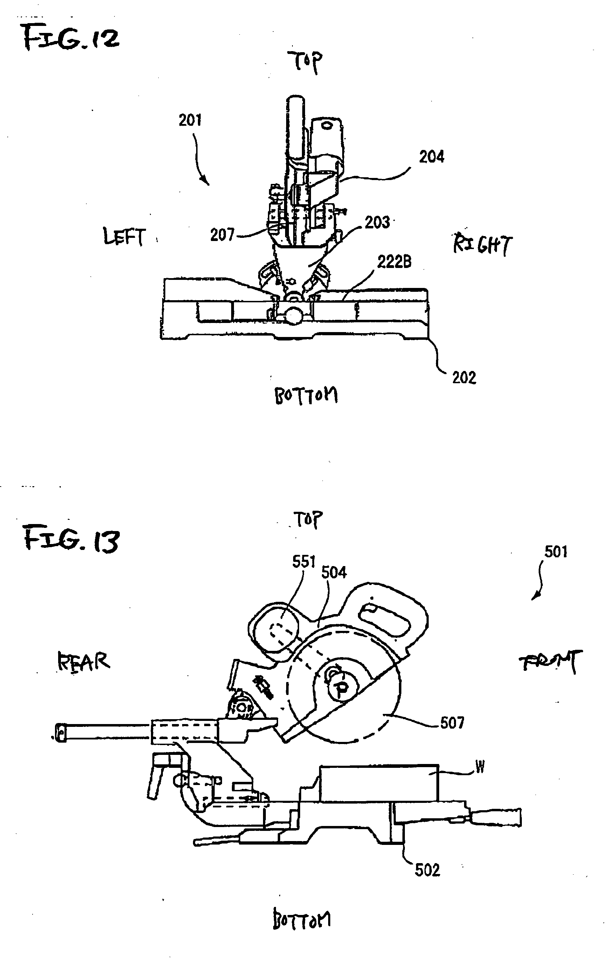

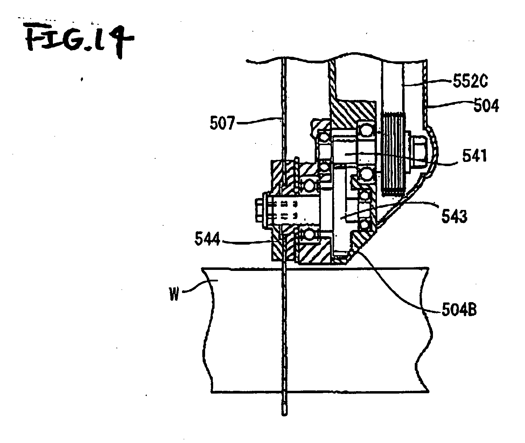

In the conventional bench cutter shown in JP-A-2004-135501, when a thick material is cut, a cutting blade of a large diameter is used. In order to hold this cutting blade of the large diameter, a large bench cutter is conventionally used. As the conventional bench cutter, the bench circular sawing machine 501 shown in Fig. 13 is provided. The bench circular sawing machine 501 has a cutting portion 504 for pivotally supporting the cutting blade 507 on the base portion 502. As shown in Fig. 14, the cutting portion 504 includes: a first gear 541 to which a rotation of the motor 551 is transmitted through the belt 552C; and a second gear 543 to which the cutting blade 507 is fixed and power is transmitted from the first gear 541. The rotation of the motor 551 is reduced by two gears and the cutting blade 507 is rotated by a reduced speed.

Since the rotation of the motor 551 is reduced by the second gear 543, a diameter of the second gear 543 is extended. Therefore, a size of the gear case 504B for accommodating the gears is increased in the radial direction of the gear. Accordingly, a cutting capacity (a cutting depth) of the cutting blade 507 is deteriorated. For the above reasons, in order to cut a thick material, it is necessary to ensure a cutting capacity by extending a size of the bench cutter. When the size of the bench cutter is extended, its weight is increased. Therefore, the transporting property of transporting the bench cutter is deteriorated. When the size of the bench cutter is extended, the accommodating property of accommodating the bench cutter is deteriorated. In the bench cutter, a gear case, in which a spindle attached with a cutting blade through a flange is accommodated and gears to drive the spindle are also accommodated, is larger than the flange for fixing the cutting blade to the spindle. Therefore, a region, in which the cutting blade can cut a material, is restricted with respect to the diameter of the cutting blade. As a result, at the time of cutting a thick material, it is necessary to use a cutting blade of a large diameter. In view of the above circumstances, an object of the present invention is to provide a small and light bench cutter capable of cutting a thick material by effectively using a cutting blade.

### SUMMARY OF THE INVENTION

In order to solve the above disadvantages, the present invention provides a bench cutter according to claim 1.

Due to the above constitution, a range from the outer circumferential position of the cutting blade to the flange position can be made to be a cutting margin in the cutting blade. Therefore, it is possible to extend the range of the cutting blade capable of being used for cutting. It is also possible to increase a cutting depth of the cutting blade. Accordingly, even a thick material can be cut with a small cutting blade incorporated into a small bench cutter.

According to the invention, the transmission mechanism includes: a first gear directly driven by the drive portion; a final gear integrally rotated together with the spindle; and an intermediate gear portion, which is respectively meshed with the first gear and the final gear, reducing a rotation of the first gear and transmitting the reduced rotation to the final gear.

The transmission mechanism may includes: a first gear, which is arranged in the drive portion, driven through a belt or chain; a final gear rotated integrally with the spindle; and an intermediate gear portion, which is respectively meshed with the first and final gear, reducing a rotation of the first gear and transmitting the reduced rotation to the final gear.

Due to the above constitution, power can be transmitted to the final gear while a rotation of the drive portion is being sufficiently reduced. Accordingly, it becomes unnecessary to use a large final gear. Therefore, a size of the gear case in the periphery of the spindle connected to the final gear can be reduced.

According to the invention, the transmission mechanism includes a lock pin held by the gear case and engaged with the intermediate gear portion.

Due to the above constitution, the intermediate gear portion is fixed to the gear case. Accordingly, the final gear meshed with the intermediate gear portion and the spindle can be fixed. Therefore, the flange fixed to the spindle can be easily detached. Since the lock pin is engaged with the intermediate gear portion, as compared with a case in which the lock pin is engaged with the final gear, a size of the gear case in the saw blade width direction can be prevented from increasing.

It is preferable that the supporting portion including: an inclining mechanism for supporting the cutting portion with respect to the base portion so that the cutting portion can be inclined in a direction perpendicular to a side of the cutting blade, and the gear case includes: an inclined face opposed to the upper face of the base portion when the cutting blade is inclined, wherein an opening portion for operating the lock pin is formed on the inclined face. It is preferable that a lid capable of being freely opened and closed is arranged in the opening portion.

It is preferable that the intermediate gear portion includes: a second gear meshed with the first gear; and a third gear concentrically fixed to the second gear and meshed with the final gear, wherein the lock pin is engaged with the second gear.

Due to the above constitution, it is possible to have access to the lock pin easily. Since the lid is provided, it is possible to prevent an operator from touching the lock pin unexpectedly.

It is preferable that while the cutting portion is being made to come the closest to the base portion being pivotally moved) and the cutting blade is maintained in a state perpendicular to the upper face of the base portion, the first gear is located at the uppermost position and separated most from the cutting blade and the final gear is located at the lowermost position and made to come the closest to the cutting blade, the intermediate gear portion is located at an intermediate portion between the first and the final gear, and the respective rotary shafts of the first gear, the intermediate gear and the final gear are positioned on the same axis perpendicular to the upper face of the base portion.

Due to the above constitution, in the final gear, the intermediate gear and the first gear, when the first gear arranged at a position the most distant from the base portion is located in the perpendicular direction on the substantially same line, the first gear can be most separated from the base portion. In the above constitution of the final gear, the intermediate gear and the first gear, according to a distance from the cutting blade to the first gear and a distance from the base portion to the first gear, an inclination angle of the inclined face with respect to the cutting blade is prescribed. When the first gear is most separated from the base portion, an angle of the inclined face with respect to the cutting blade can be made to be an acute angle. When the angle of the inclined face is the acute angle, an inclination angle, at which the cutting portion is inclined, can be increased.

It is preferable that the drive portion includes an output shaft portion for outputting torque, the first gear is a bevel gear and attached to the output shaft portion and the intermediate gear portion includes a bevel gear meshed with the first gear.

It is preferable that the drive portion is arranged so that the output shaft portion can be positioned between the first gear and the cutting blade.

Due to the above constitution, the output shaft portion of the drive portion can be arranged in parallel with the side of the cutting blade. Therefore, a distance from the side of the cutting blade to the drive portion can be decreased. Especially, when it is composed in such a manner that the output shaft portion is positioned between the first gear and the cutting blade, the distance from the side of the cutting blade to the drive portion can be decreased. Therefore, the drive portion can be prevented from coming into contact with the base portion at the time of inclining the cutting portion. Accordingly, the inclination angle can be more increased.

It is preferable that the drive portion is arranged being horizontal, vertical or inclined with respect to the axial direction of the spindle.

In the above bench cutter, it is preferable that the drive portion is arranged in an upper portion of the cutting portion, the output shaft portion of the drive portion is arranged substantially in parallel with the spindle, and a rotation of the output shaft portion is transmitted to the first gear through a belt.

Due to the above constitution, power can be transmitted to the final gear under the condition that a speed of the drive portion is sufficiently reduced. Therefore, it becomes unnecessary to use a large final gear and a size of the gear case in the periphery of the spindle connected to the final gear can be decreased. Since the size of the gear case is decreased, a range from the cutting blade outer circumferential position to the flange position can be made to be a cutting margin in the cutting blade. Therefore, a range capable of being used for cutting of the cutting blade can be extended with respect to the diameter of the cutting blade and further a cutting depth can be increased. Due to the foregoing, even a small cutting blade can cut a thick material. Accordingly, even a small bench cutter can cut the thick material.

According to the bench cutter of the present invention, it is possible to reduce a size and weight. Further, it is possible to increase a cutting depth.

According to an aspect of the present invention, there is provided a bench cutter including: a drive portion driving a cutting blade; a base portion supporting a workpiece; a cutting portion arranged on the base portion, pivotally supporting the cutting blade above the base portion, and configured to make the cutting blade come close to and separate from the base portion; and a supporting portion connected to the base portion and movably supporting the cutting portion, wherein the cutting portion including: a transmission mechanism for transmitting power of the drive portion to the cutting blade; and a gear case covering the transmission mechanism and having a lower face portion opposed to an upper face of the base portion, wherein the transmission mechanism including: a spindle concentrically supporting the cutting blade; and a cutting blade fixing portion having a flange for fixing the cutting blade to the spindle, wherein while the cutting blade is being maintained in a state perpendicular to the upper face of the base portion, a distance between the lower face portion of the gear case and the upper face of the base portion is not less than a distance between the base portion side end face of the flange and the upper face of the base portion.

### BRIEF DESCRIPTION OF THE SEVERAL VIEWS OF THE DRAWINGS

Fig. 1 is a side view showing a bench cutter of an embodiment of the present invention.
Fig. 2 is a front view showing a bench cutter of an embodiment of the present invention.
Fig. 3 is a sectional view showing a cutting portion of a bench cutter of an embodiment of the present invention.
Fig. 4 is a schematic drawing showing an arrangement of a transmission mechanism of a bench cutter of an embodiment of the present invention.
Fig. 5 is a sectional view showing a cutting portion of a bench cutter of an embodiment of the present invention which is in a tilted state.
Fig. 6 is a side view showing a cutting portion of a bench cutter of an embodiment of the present invention.
Fig. 7 is a partial sectional view showing a cutting portion of a bench cutter of an embodiment of the present invention in which the second gear is locked.
Fig. 8 is a side view showing a cutting portion of a bench cutter of an embodiment of the present invention in which a lid is closed.
Fig. 9 is a side view showing a cutting portion of a bench cutter of a first variation of an embodiment of the present invention.
Fig. 10 is a sectional view showing a cutting portion of a bench cutter of a first variation of an embodiment of the present invention.
Fig. 11 is a sectional view showing a cutting portion of a bench cutter of a second variation of an embodiment of the present invention.
Fig. 12 is a front view showing a bench cutter of a second variation of an embodiment of the present invention.
Fig. 13 is a side view of a bench cutter of a conventional example.
Fig. 14 is a sectional view showing a cutting portion of a bench cutter of a conventional example.

### DETAILED DESCRIPTION

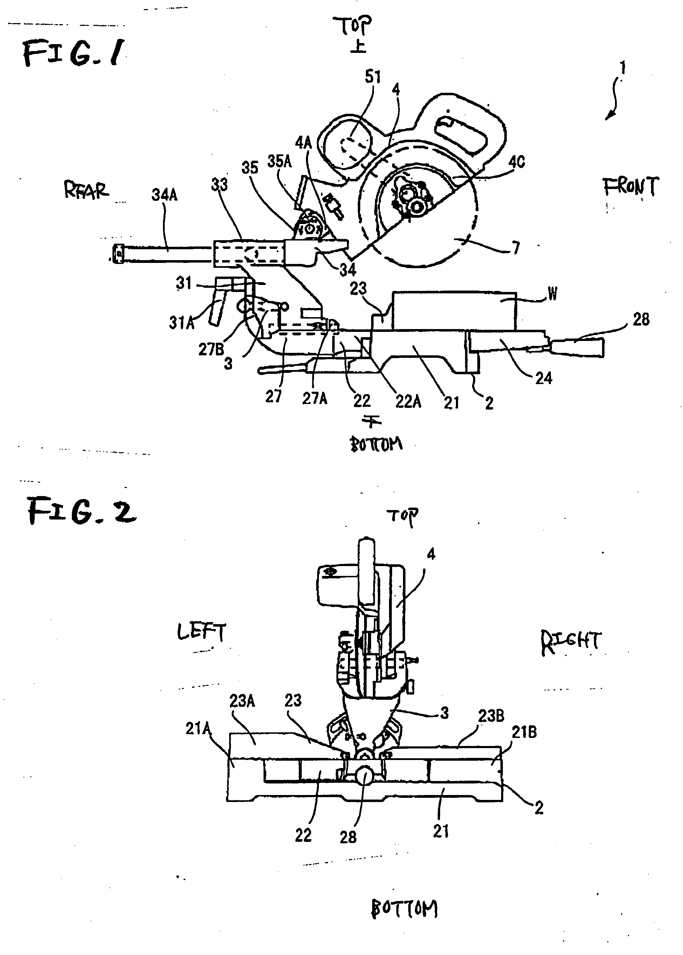

Referring to Figs. 1 to 8, an embodiment of the present invention will be explained below. The bench circular sawing machine shown in Fig. 1, which is a bench cutter as a miter saw 1, includes a slide mechanism. The miter saw 1 also includes: a base portion 2; a supporting portion 3; a cutting portion 4; and a cutting blade 7. A miter saw with a slide mechanism is described in following embodiments, but this invention may be adapted to a miter saw having no slide mechanism.

The base portion 2 includes: a base 21 for holding a lumber W which is a member to be cut; a turn table 22 pivotally held on the base 21; and a fence 23 provided on the base 21. As shown in Fig. 2, the base 21 is formed out of a pair of bases in which one is the left base 21A and the other is the right base 21B. A direction, in which the left base 21A and the right base 21B are arranged, is defined as a lateral direction. An upper portion of the face of the base 21, on which the lumber W is put, is defined as "upper" and an opposite portion of the face of the base 21 is defined as "lower".

As shown in Fig. 2, the turn table 22 is arranged between the right base 21B and the left base 21A. As shown in Fig. 1, the turn table 22 includes: a turn table body portion 22A, the shape of which is formed into a substantial circular truncated cone; a protruding portion 24 protruding to one side of the turn table body 22A; and a cutting portion supporting portion 27 for supporting the supporting portion 3 described later arranged on the other side. A direction in which the protruding portion 24 protrudes from the turn table, that is, a direction perpendicular to the lateral direction is defined as "the front" and the opposite direction is defined as "the rear".

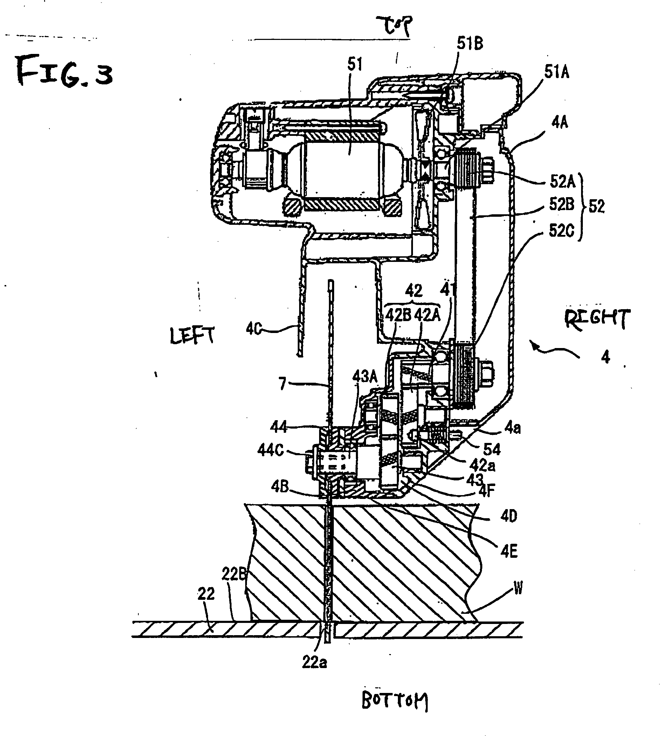

On the upper face 22B of the turn table 22, a series of groove 22a (shown in Fig. 3) is formed in a range from the neighborhood of the cutting portion supporting portion 27 to the protruding portion 24. This groove portion 22a is located at the same position as the cross line position at which the cutting blade 7 pivotally moves and crosses the turn table 22. This groove portion 22a is a portion in which a tip of the cutting blade 7 is accommodated.

As shown in Figs. 1 and 2, the protruding portion 24 includes a regulation operating portion 28 which is an operating portion for regulating at the time of regulating a rotation of the turn table 22 with respect to the base 21. As shown in Fig. 1, the cutting portion supporting portion 27 is arranged at a position on the opposite side to the protruding portion 24 with respect to the central axis of the turn table 22. The cutting portion supporting portion 27 includes: a tilting shaft 27A positioned on a prolonged line of the groove portion 22a (shown in Fig. 3); and a tilting supporting portion 27B by which the supporting portion 3 is fixed at an arbitrary inclination angle.

As shown in Fig. 1, on the base 21 and at the upper position of the turn table 22, the fence 23 is provided. As shown in Fig. 2, the fence 23 includes a left fence 23A and a right fence 23B corresponding to the left base 21A and the right base 21B. Front faces of the left fence 23A and the right fence 23B are arranged so that the front faces can be located on the same plane. Therefore, the front faces of the left fence 23A and the right fence 23B prescribe a position of the lumber W (shown in Fig. 1).

As shown in Fig. 1, the supporting portion 3 includes: a tilting portion 31; a slide supporting portion 33; a sliding portion 34; and a pivot shaft portion 35. The tilting portion 31 is supported by the tilting shaft 27A and capable of being fixed to the tilting supporting portion 27B by the clamp 31A. When this clamp 31A is loosened, the tilting portion 31 can be tilted. When this clamp 31A is fastened, the tilting portion 31 is fixed to the tilting supporting portion 27B. The slide supporting portion 33 is formed out of two cylindrical bodies and arranged in an upper portion of the tilting portion 31 integrally with the tilting portion 31. The sliding portion 34 has two sliding pipes 34A inserted into two cylinders of the slide supporting portion 33. When the two sliding pipes 34A slide with respect to the slide supporting portion 33, the sliding portion 34 can be moved in the longitudinal direction. The pivot shaft portion 35 is provided in the sliding portion 34 and formed out of a pair of arms. Between the pair of arms, the pivot shaft portion 35A is provided. The pivot shaft portion 35A supports the cutting portion 4 so that the cutting blade 7 can be made to come close to and separate from an upper face of the turn table 22.

The cutting portion 4 is composed in such a manner that the housing 4A (shown in Fig. 3) supported by the pivot shaft portion 35A is provided as an outer shell of the cutting portion 4. As shown in Fig. 3, the motor 51 and the pulley portion 52 are arranged inside the housing 4A. The housing 4A includes: a gear case 4B; a cutting blade cover 4C; and a handle which becomes a holding portion at the time of cutting.

The motor 51 is arranged so that the output shaft 51A connected to the pulley portion 52 can be extended in parallel with the axial direction of the spindle 43A described later. The cooling fan 51B is mounted on the output shaft 51A. The pulley portion 52 includes: a first pulley 52A connected to the output shaft 51A; a second pulley 52C connected to the transmission mechanism 4D described later; and a belt 52B provided between the first pulley 52A and the second pulley 52C.

As shown in Fig. 3, the gear case 4B includes: a lower face portion 4E opposed to the upper face portion 22B under the condition that the cutting blade 7 comes close to the base 21 or the turn table 22 and is substantially perpendicular to the upper face 22B of the turn table 22; and an inclined face 4F which is arranged being inclined with respect to the lower face portion 4E. Inside the gear case 4B, the transmission mechanism 4D is arranged. In this connection, the inclined face 4F includes a portion of the housing 4A. The lower face portion 4E is composed so that a distance between the lower face portion 4E and the upper face 22B can be longer than a distance between the end face on the turn table 22 side of the flange 44 described later and the upper face 22B under the condition that the cutting blade 7 is perpendicular to the upper face 22B.

The transmission mechanism 4D includes: a first gear 41; an intermediate gear 42; and a final gear 43. The first gear 41 is a helical gear and connected to the second pulley 52B and pivotally supported by the gear case 4B. The intermediate gear 42 includes: a second gear 42A meshed with the first gear 41; and a third gear 42B which is arranged on the same shaft as that of the second gear 42A and meshed with the final gear 43. The intermediate gear 42 is pivotally supported by the gear case 4B through a pair of bearings. The second gear 42A and the third gear 42B are respectively composed of helical gears. Tooth traces of the second gear 42A and the third gear 42B are directed in the opposite directions. The number of teeth of the second gear 42A is larger than the number of teeth of the third gear 42B. Due to the above constitution, the rotating speed of the first gear 41 is reduced and transmitted to the final gear 43 and the thrust forces of the respective gears can be canceled to each other. The final gear 43 is a helical gear and meshed with the third gear 42B and provided with a spindle 43A on which the cutting blade 7 is mounted. The final gear 43 is pivotally supported by the gear case 4B through a pair of bearings.

Power is transmitted to the final gear 43 while the rotating speed is being reduced by the intermediate gear portion 42. Therefore, it is unnecessary to use a gear, the diameter of which excessively large. Accordingly, the gear case 4B provided in the periphery of the final gear 43 can be made small. The flange 44, which is a cutting blade fixing portion for fixing the cutting blade 7, and the bolts 44C can be mounted on the spindle 43A.

Furthermore, as mentioned above, the pulley portion 52 includes the first pulley 52A, the second pulley 52C, and the belt 52B. As shown in Fig. 3, the size (diameter) of the second pulley 52C is configured to be larger than that of the second pulley 52A. By having such a configuration, the rotation of the motor 51 is transmitted from the output shaft 51A to the first gear 41 of the transmission mechanism 41 through the pulley portion 52 in a reduced manner. The sizes (diameters) of the intermediate gear 42 and the final gear 43 may be reduced in obtaining a desired speed reduction ratio, as compared with a case where the sizes (diameters) of the first pulley 52A and the second pulley 52B are the same. Accordingly, the intermediate gear 42 and the gear case 4B in the periphery of the final gear 43 can be reduced in size. This is the case where the speed reduction is done in the three stages so that a capability of achieving a depth of cut can be improved. This configuration is to perform a speed reduction for one stage by setting the diameters of the pulleys different from each other. As compared with a case where the three-stage speed reduction is achieved by providing plural gears, it is possible to reduce the size of the gear case while having a simple configuration and improving the capability for achieving depth of cut at low cost.

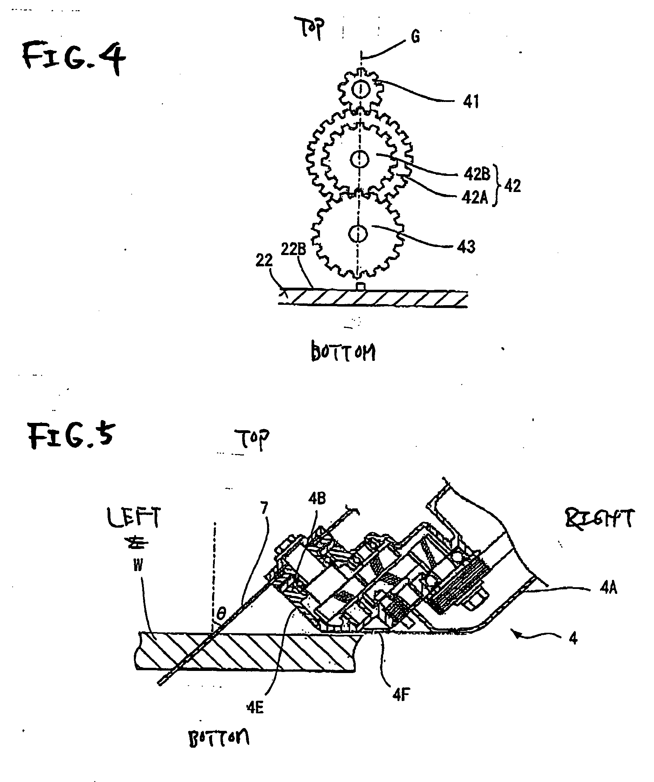

As shown in Fig. 3, the first gear 41, the intermediate gear portion 42 and the final gear 43 are arranged so that these gears can be made to come most close to the upper face 22B of the turn table 22 of the base portion 2 (shown in Fig. 1) when the cutting portion 4 is pivoted and so that the first gear 41 can be located at the uppermost position and separated from the cutting blade 7 most distantly and so that the final gear 43 can be located at the lowermost position and made to come most close to the cutting blade 7 and so that the intermediate gear portion 42 can be located at the intermediate position between the first gear 41 and the final gear 43 under the condition that the cutting blade 7 is perpendicular to the upper face 22B. Under the condition that the cutting portion 4 is pivoted and made to come most close to the upper face 22B, as shown in Fig. 4, the respective rotary shafts of the first gear 41, the intermediate gear portion 42 and the final gear 43 are arranged in a line on the axis G which is perpendicular to the upper face 22B.

In the constitution of the final gear 43, the intermediate gear portion 42 and the first gear 41 described above, an angle of the inclination of the inclined face 4F with respect to the cutting blade 7 to accommodate these gears is prescribed according to the distance between the cutting blade 7 and the first gear 41 and also according to the distance between the upper face 22B and the first gear 41. When the respective shafts of the gears are arranged on the same axis G perpendicular to the upper face 22B as described above, the first gear 41 can be most separated from the upper face 22B under the condition that the cutting portion 4 is pivoted downward. When the first gear 41 is arranged at a position which is most separate from the upper face 22B, an angle of the inclined face 4F with respect to the cutting blade 7 can be made to be an acute angle. When the angle of the inclined face 4F is the acute angle, as shown in Fig. 5, when the cutting portion 4 is tilted, the tilting angle θ of the cutting portion 4 can be increased.

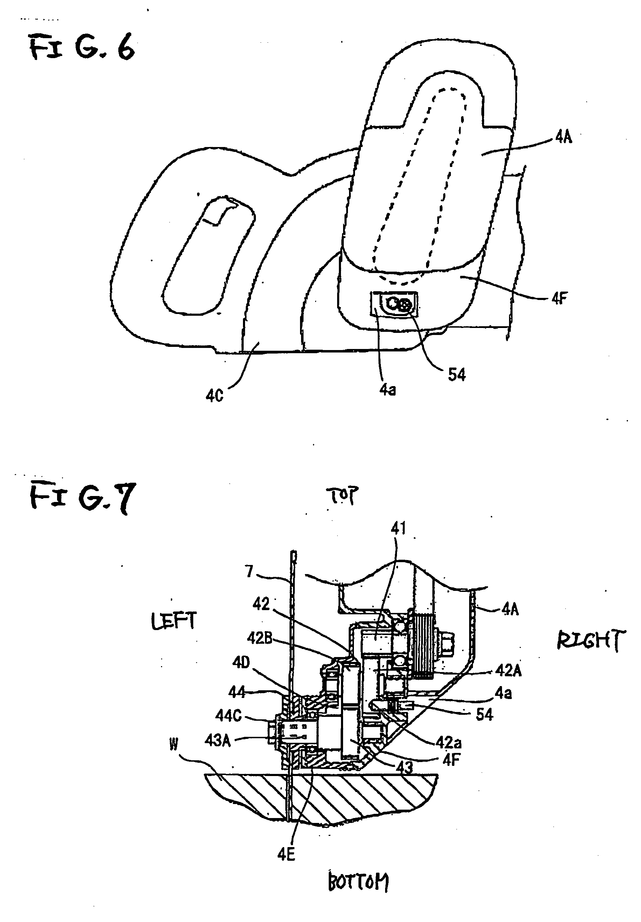

As shown in Fig. 3, the hole 42a is formed on the side of the inclined face 4F of the second gear 42A. As shown in Figs. 3 and 6, the opening portion 4a is formed on the inclined face 4F of the gear case 4B. In the opening portion 4a, the lock pin 54 capable of moving toward the second gear 42A side is arranged. It is composed in such a manner that an end portion on the second gear 42A side of the lock pin 54 can be inserted into the hole 42a and the lock pin 54 is pushed by a spring onto the opposite side to the second gear 42A side. Therefore, at the time of cutting, the lock pin 54 is located at a position distant from the second gear 42A as shown in Fig. 3. Accordingly, there is no possibility that the second gear 42A is locked by the lock pin 54.

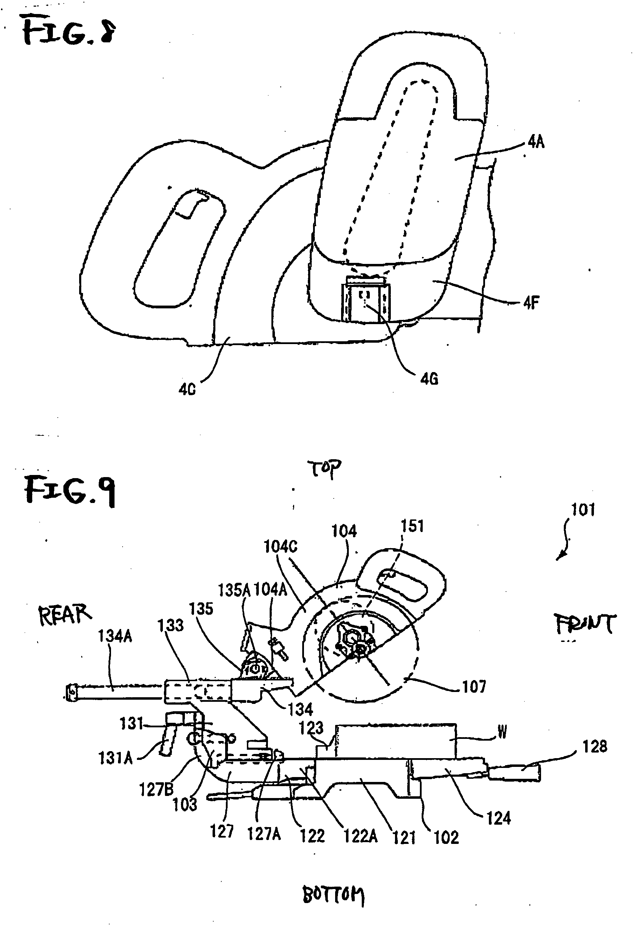

At the time of detaching the bolt 44c fixing the cutting blade 7, as shown in Fig. 7, the final gear 43 and the spindle 43A are locked when the second gear 42A is locked. At this time, when the lock pin 54 is pushed onto the second gear 42A side and engaged with the hole 42a, the second gear 42A can be suitably locked. In the opening portion 4a which has access to the lock pin 54, the lid 4G is provided as shown in Fig. 8. Therefore, unless the lid 4G is opened and the lock pin 54 is pushed, the lock pin 54 is not moved on the second gear 42A side. Accordingly, it is possible to prevent the malfunction of the lock pin 54.

As shown in Fig. 1, the cutting blade cover 4C covers an upper portion of the cutting blade 7. As shown in Fig. 3, the cutting blade cover 4C is composed so that it can not protrude onto the lower side of the flange 44 when the cutting portion 4 is pivoted downward.

In the case of cutting the lumber W with the miter saw composed as described above, as shown in Fig. 3, the cutting portion 4 is pivoted downward and cuts the lumber W with the cutting blade 7. At this time, the thickness of the lumber W capable of being cut with the miter saw 1 is set according to a distance from the lowermost position of the cutting blade 7 to the position at which the cutting portion 4 comes into contact with an upper face of the lumber W. In the miter saw 1 described here, the position at which the cutting portion 4 comes into contact with the upper face of the lumber W is the lowermost position of the flange 44. Due to the foregoing, a value obtained when a radius of the flange 44 is subtracted from a radius of the cutting blade 7 can be made to be a cutting depth, that is, a diameter of the portion from which the cutting blade 7 is exposed can be made to be a cutting depth.

In the conventional miter saw, before the flange comes into contact with the lumber, the gear case, the housing or the cutting blade cover comes into contact with the lumber. Therefore, a diameter of the portion in which the cutting blade 7 is exposed can not be made to be a cutting depth. On the other hand, in the miter saw 1 of the present case, for example, a lumber, which can not be cut without using a conventional cutting blade of 8 inches, can be cut by using a cutting blade 7 of 7 inches. When the miter saw, the upper limit of the usable cutting blade diameter of which is 8 inches, is compared with the miter saw, the upper limit of the usable cutting blade diameter of which is 7 inches, the miter saw, the upper limit of the usable cutting blade diameter of which is 8 inches, is larger and heavier than the miter saw, the upper limit of the usable cutting blade diameter of which is 7 inches. Therefore, when the constitution of the present case is employed, the thick material can be cut even by using the small, light miter saw.

It should be noted that the miter saw of the present invention not limited to the above specific embodiment. Variations and improvements can be made without departing from the scope of claims of the present invention.

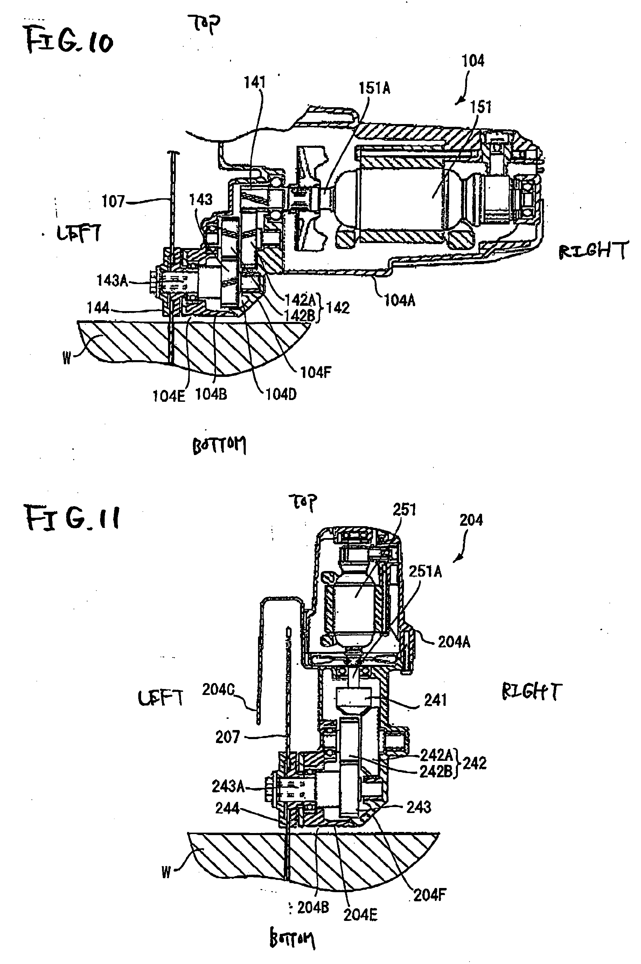

For example, as shown in Figs. 9 and 10, it is possible to employ a constitution in which the first gear 141 is directly mounted on the output shaft 151A of the motor 151. In this case, the cutting portion 104 can be inclined onto one side with respect to the base portion 121. In another embodiment in which the first gear is directly fixed to the drive portion as shown in Fig. 11, the first gear 241 and the second gear 242A may be respectively formed out of helical gears and the motor 251 may be arranged so that the output shaft 151A can be perpendicular to the axial direction of the spindle 243A. Due to the above constitution, as shown in Fig. 12, a protruding portion to the right of the cutting portion 204 is suppressed and an inclination angle to the right of the cutting portion 204 can be increased.

As shown in Fig. 11, when the motor 251 is arranged so that the output shaft 251A can be located between the first gear 241 and the cutting blade 207, a protruding portion to the right of the cutting portion 204 shown in Fig. 12 is further suppressed. The third gear 242B and the final gear 243 may be formed out of helical gears. In this case, a direction of the helical teeth of the third gear 242B may be determined to be a direction in which a thrust force direction is directed to the left, that is, a direction in which the second gear 242A is pushed to the first gear 241.

## Claims

1. A bench cutter (1) comprising:
a drive portion driving a cutting blade (7; 107; 207);
a base portion (2; 102; 202) supporting a workpiece (W);
a cutting portion (4; 104; 204) arranged on the base portion (2; 102; 202), pivotally supporting the cutting blade (7; 107; 207) above the base portion (2; 102; 202), and configured to make the cutting blade (7; 107; 207) come close to and separate from the base portion (2; 102; 202); and
a supporting portion (3; 103; 203) connected to the base portion (2; 102; 202) and movably supporting the cutting portion (4; 104; 204),
wherein the cutting portion (4; 104; 204) includes:
a transmission mechanism (4D) for transmitting power of the drive portion to the cutting blade (7; 107; 207); and
a gear case (4B) covering the transmission mechanism (4D) and having a lower face portion (4E) opposed to an upper face of the base portion (2; 102; 202),
wherein the transmission mechanism (4D) includes:
a spindle (43A; 143A; 243A) concentrically supporting the cutting blade (7; 107; 207);
a cutting blade fixing portion having a flange (44; 144; 244) for fixing the cutting blade (7; 107; 207) to the spindle (43A; 143A; 243A);
a first gear (41; 141; 241) directly driven by the drive portion; and
a final gear (43; 143; 243) integrally rotated together with the spindle (43A; 143A; 243A),
wherein, while the cutting blade (7; 107; 207) is being maintained in a state perpendicular to the upper face of the base portion (2; 102; 202), a distance between the lower face portion (4E) of the gear case (4B) and the upper face of the base portion (2; 102; 202) is not less than a distance between the base portion (2; 102; 202) side end face of the flange (44; 144; 244) and the upper face of the base portion (2; 102; 202),
**characterised in that** the transmission mechanism (4D) further includes:
an intermediate gear portion (42; 142; 242) respectively meshed with the first gear (41; 141; 241) and the final gear (43; 143; 243), the intermediate gear portion (42; 142; 242) reducing a rotation of the first gear (41; 141; 241) and transmitting the reduced rotation to the final gear (43; 143; 243); and
a lock pin (54) held by the gear case (4B) and engaged with the intermediate gear portion (42; 142; 242).

2. The bench cutter (1) according to claim 1, wherein the first gear (41) is arranged in the drive portion and driven through a belt (52B) or chain.

3. The bench cutter (1) according to claim 1, wherein
the supporting portion (3; 103; 203) includes an inclining mechanism supporting the cutting portion (4; 104; 204) with respect to the base portion (2; 102; 202) so that the cutting portion (4; 104; 204) is inclined in a direction perpendicular to a side of the cutting blade (7; 107; 207),
the gear case (4B) includes an inclined face (4F) opposed to the upper face of the base portion (2; 102; 202) when the cutting blade (7; 107; 207) is inclined, and
an opening portion (4a) for operating the lock pin (54) is formed on the inclined face (4F).

4. The bench cutter (1) according to claim 3, wherein a lid (4G) capable of being freely opened and closed is arranged in the opening portion (4a).

5. The bench cutter (1) according to claim 1, wherein the intermediate gear portion (42; 142; 242) includes:
a second gear (42A; 142A; 242A) meshed with the first gear (41; 141; 241); and
a third gear (42B; 142B; 242B) concentrically fixed to the second gear (42A; 142A; 242A) and meshed with the final gear (43; 143; 243),
wherein the lock pin (54) is engaged with the second gear (42A; 142A; 242A).

6. The bench cutter (1) according to claim 1, wherein
while the cutting portion (4; 104; 204) is being made to come the closest to the base portion (2; 102; 202) being pivotally moved and the cutting blade (7; 107; 207) is maintained in a state perpendicular to the upper face of the base portion (2; 102; 202), the first gear (41; 141; 241) is located at the uppermost position and separated most from the cutting blade (7; 107; 207) and the final gear (43; 143; 243) is located at the lowermost position and made to come the closest to the cutting blade (7; 107; 207),
the intermediate gear portion (42; 142; 242) is located at an intermediate portion between the first gear (41; 141; 241) and the final gear (43; 143; 243), and
the respective rotary shafts of the first gear (41; 141; 241), the intermediate gear portion (42; 142; 242) and the final gear (43; 143; 243) are positioned on the same axis (G) perpendicular to the upper face of the base portion (2; 102; 202).

7. The bench cutter (1) according to claim 1, wherein
the drive portion includes an output shaft portion (251 A) for outputting torque,
the first gear (241) is a bevel gear and attached to the output shaft portion (251 A), and
the intermediate gear portion (242) includes a bevel gear (242A) meshed with the first gear (241).

8. The bench cutter (1) according to claim 7, wherein the drive portion is arranged so that the output shaft portion (251A) can be positioned between the first gear (241) and the cutting blade (207).

9. The bench cutter (1) according to claim 1, wherein the drive portion is arranged being horizontal, vertical or inclined with respect to the axial direction of the spindle (43A; 143A; 243A).

10. The bench cutter (1) according to claim 1, wherein
the drive portion is arranged in an upper portion of the cutting portion (4),
an output shaft portion (51A) of the drive portion is arranged substantially in parallel with the spindle (43A), and
a rotation of the output shaft portion (51A) is transmitted to the first gear (41) through a belt (52B).

11. The bench cutter (1) according to claim 1 or 2, wherein
the transmission mechanism (4D) includes a transmission section (52), the first gear (41) being driven by the drive portion through the transmission section (52); and
the transmission section (52) includes a first pulley (52A) and a second pulley (52C) connected to the first gear (41), the second pulley (52C) having a diameter larger than the first pulley (52A).

12. The bench cutter (1) according to claim 10, further comprising:
a first pulley (52A) connected to the output shaft portion (51 A); and
a second pulley (52C) connected to the first gear (41), the second pulley (52C) having a diameter larger than the first pulley (52A),
wherein the rotation of the output shaft portion (51A) is transmitted to the first gear (41) through the first pulley (52A), the belt (52B) and the second pulley (52C).

## Patentansprüche

1. Tischsäge (1) mit
einem Antriebsabschnitt zum Antreiben eines Sägeblatts (7; 107; 207),
einem Basisabschnitt (2; 102; 202) zum Tragen eines Werkstücks (W),
einem Sägeabschnitt (4; 104; 204), der auf dem Basisabschnitt (2; 102; 202) angeordnet ist, das Sägeblatt (7; 107; 207) schwenkbar über dem Basisabschnitt (2; 102; 202) trägt, und dazu ausgelegt ist, das Sägeblatt (7; 107; 207) dem Basisabschnitt (2; 102; 202) zu nähern und von diesem zu entfernen, und
einem Trageabschnitt (3; 103; 203), der mit dem Basisabschnitt (2; 102; 202) verbunden ist und den Sägeabschnitt (4; 104; 204) bewegbar trägt,
wobei der Sägeabschnitt (4; 104; 204) aufweist:
einen Übertragungsmechanismus (4D) zum Übertragen von Leistung des Antriebsabschnitts zu dem Sägeblatt (7; 107; 207), und
ein Getriebegehäuse (4B), das den Übertragungsmechanismus (4D) überdeckt und das einen Unterseitenabschnitt (4E) aufweist, der einer Oberseite des Basisabschnitts (2; 102; 202) entgegengesetzt ist,
wobei der Übertragungsmechanismus (4D) aufweist:
eine das Sägeblatt (7; 107; 207) konzentrisch tragende Welle (43A; 143A; 243A),
einen Sägeblattbefestigungsabschnitt mit einem Flansch (44; 144; 244) zum Befestigen des Sägeblatts (7; 107; 207) an der Welle (43A; 143A; 243A),
ein erstes Getriebeelement (41; 141; 241), das direkt durch den Antriebsabschnitt angetrieben wird, und
ein letztes Getriebeelement (43; 143; 243), das zusammen mit der Welle (43A; 143A; 243A) als Ganzes gedreht wird,
wobei, wenn das Sägeblatt (7; 107; 207) in einem Zustand senkrecht zu der Oberseite des Basisabschnitts (2; 102; 202) gehalten ist, ein Abstand zwischen dem Unterseitenabschnitt (4E) des Getriebegehäuses (4B) und der Oberseite des Basisabschnitts (2; 102; 202) nicht kleiner ist als ein Abstand zwischen der zum Basisabschnitt (2; 102; 202) weisenden Endseite des Flansches (44; 144; 244) und der Oberseite des Basisabschnitts (2; 102; 202),
**dadurch gekennzeichnet, dass** der Übertragungsmechanismus (4D) ferner aufweist:
einen Zwischengetriebeabschnitt (42; 142; 242) der jeweils mit dem ersten Getriebeelement (41; 141; 241) und dem letzten Getriebeelement (43; 143; 243) in Eingriff steht, wobei der Zwischengetriebeabschnitt (42; 142; 242) eine Drehung des ersten Getriebeelements (41; 141; 241) verringert und die verringerte Drehung an das letzte Getriebeelement (43; 143; 243) überträgt, und
einen Verriegelungsstift (54), der durch das Getriebegehäuse (4B) gehalten wird und mit dem Zwischengetriebeabschnitt (42; 142; 242) in Eingriff steht.

2. Tischsäge (1) nach Anspruch 1, wobei das erste Getriebeelement (41) in dem Antriebsabschnitt angeordnet ist und durch ein Band (52B) oder eine Kette angetrieben wird.

3. Tischsäge (1) nach Anspruch 1, wobei
der Trageabschnitt (3; 103; 203) einen Schrägstellungsmechanismus aufweist, der den Sägeabschnitt (4; 104; 204) bezüglich des Basisabschnitts (2; 102; 202) so trägt, dass der Sägeabschnitt (4; 104; 204) in einer Richtung senkrecht zu einer Seite des Sägeblatts (7; 107; 207) geneigt ist,
das Getriebegehäuse (4B) eine geneigte Fläche (4F) aufweist, die der Oberseite des Basisabschnitts (2; 102; 202) entgegengesetzt ist, wenn das Sägeblatt (7; 107; 207) geneigt ist, und
ein Öffnungsabschnitt (4a) zum Betätigen des Verriegelungsstifts (54) auf der geneigten Fläche (4F) gebildet ist.

4. Tischsäge (1) nach Anspruch 3, wobei ein frei zu öffnender und zu schlieβender Deckel (4G) in dem Öffnungsabschnitt (4a) angeordnet ist.

5. Tischsäge (1) nach Anspruch 1, wobei der Zwischengetriebeabschnitt (42; 142; 242) aufweist:
ein zweites Getriebeelement (42A; 142A; 242A), das mit dem ersten Getriebeelement (41; 141; 241) in Eingriff steht, und
ein drittes Getriebeelement (42B; 142B; 242B), das konzentrisch an dem zweiten Getriebeelement (42A; 142A; 242A) befestigt ist und mit dem letzten Getriebeelement (43; 143; 243) in Eingriff steht,
wobei der Verriegelungsstift (54) mit dem zweiten Getriebeelement (42A; 142A; 242A) in Eingriff steht.

6. Tischsäge (1) nach Anspruch 1, wobei
während der Sägeabschnitt (4; 104; 204) dazu gebracht wird, dem Basisabschnitt (2; 102; 202) durch eine Schwenkbewegung am nächsten zu kommen und das Sägeblatt (7; 107; 207) in einem Zustand senkrecht zu der Oberseite des Basisabschnitts (2; 102; 202) gehalten wird, das erste Getriebeelement (41; 141; 241) an der obersten Position angeordnet und am weitesten von dem Sägeblatt (7; 107; 207) entfernt ist, und das letzte Getriebeelement (43; 143; 243) an der untersten Position angeordnet ist und dazu gebracht wird, dem Sägeblatt (7; 107; 207) am nächsten zu kommen,
der Zwischengetriebeabschnitt (42; 142; 242) an einem Zwischenabschnitt zwischen dem ersten Getriebeelement (41; 141; 241) und dem letzten Getriebeelement (43; 143; 243) angeordnet ist, und
die jeweiligen Drehachsen des ersten Getriebeelements (41; 141; 241), des Zwischengetriebeabschnitts (42; 142; 242) und des letzten Getriebeelements (43; 143; 243) auf der gleichen Achse (G) senkrecht zu der Oberseite des Basisabschnitts (2; 102; 202) angeordnet sind.

7. Tischsäge (1) nach Anspruch 1, wobei
der Antriebsabschnitt einen Abtriebswellenabschnitt (251A) zum Ausgeben eines Drehmoments aufweist,
das erste Getriebeelement (241) ein Kegelrad ist und an dem Abtriebswellenabschnitt (251 A) angebracht ist, und
der Zwischengetriebeabschnitt (242) ein mit dem ersten Getriebeelement (241) in Eingriff stehendes Kegelrad (242A) aufweist.

8. Tischsäge (1) nach Anspruch 7, wobei der Antriebsabschnitt so angeordnet ist, dass der Abtriebswellenabschnitt (251A) zwischen dem ersten Getriebeelement (241) und dem Sägeblatt (207) positioniert werden kann.

9. Tischsäge (1) nach Anspruch 1, wobei der Antriebsabschnitt horizontal, vertikal oder geneigt bezüglich der Axialrichtung der Welle (43A; 143A; 243A) ausgerichtet ist.

10. Tischsäge (1) nach Anspruch 1, wobei
der Antriebsabschnitt in einem oberen Abschnitt des Sägeabschnitts (4) angeordnet ist,
ein Abtriebswellenabschnitt (51A) des Antriebsabschnitts im Wesentlichen parallel zu der Welle (43A) angeordnet ist, und
eine Drehung des Abtriebswellenabschnitts (51 A) durch ein Band (52B) zu dem ersten Getriebeelement (41) übertragen wird.

11. Tischsäge (1) nach Anspruch 1 oder 2, wobei
der Übertragungsmechanismus (4D) einen Übertragungsteil (52) aufweist, wobei das erste Getriebeelement (41) über den Übertragungsteil (52) durch den Antriebsabschnitt angetrieben wird, und
der Übertragungsteil (52) eine erste Rolle (52A) und eine mit dem ersten Getriebeelement (41) verbundene zweite Rolle (52C) aufweist, wobei die zweite Rolle (52C) einen größeren Durchmesser als die erste Rolle (52A) hat.

12. Tischsäge (1) nach Anspruch 10, ferner mit
einer ersten Rolle (52A), die mit dem Abtriebswellenabschnitt (51A) verbunden ist, und
einer zweiten Rolle (52C), die mit dem ersten Getriebeelement (41) verbunden ist, wobei die zweite Rolle (52C) einen größeren Durchmesser als die erste Rolle (52A) hat,
wobei die Drehung des Abtriebswellenabschnitts (51A) durch die erste Rolle (52A), das Band (52B) und die zweite Rolle (52C) zu dem ersten Getriebeelement (41) übertragen wird.

## Revendications

1. Banc à scie (1) comportant :
une partie d'entraînement entraînant une lame de coupe (7 ; 107 ; 207),
une partie de base (2 ; 102 ; 202) supportant une pièce à usiner (W),
une partie de coupe (4 ; 104 ; 204) disposée sur la partie de base (2 ; 102 ; 202), supportant de manière pivotante la lame de coupe (7 ; 107 ; 207) au-dessus de la partie de base (2 ; 102 ; 202), et configurée pour amener la lame de coupe (7 ; 107 ; 207) à proximité de la partie de base (2 ; 102 ; 202) et séparée de celle-ci, et
une partie de support (3 ; 103 ; 203) reliée à la partie de base (2 ; 102 ; 202) et supportant de manière mobile la partie de coupe (4 ; 104 ; 204),
dans laquelle la partie de coupe (4 ; 104 ; 204) comprend :
un mécanisme de transmission (4D) pour transmettre de la puissance de la partie d'entraînement à la lame de coupe (7 ; 107 ; 207), et
un carter de pignons (4B) qui couvre le mécanisme de transmission (4D) et ayant une partie de face inférieure (4E) opposée à une face supérieure de la partie de base (2 ; 102 ; 202),
dans laquelle le mécanisme de transmission (4D) comprend :
une broche (43A ; 143A ; 243A) supportant de manière concentrique la lame de coupe (7 ; 107 ; 207),
une partie de fixation de la lame de coupe comprenant une bride (44 ; 144 ; 244) pour fixer la lame de coupe (7 ; 107 ; 207) sur la broche (43A ; 143A ; 243A),
un premier pignon (41 ; 141 ; 241) entraîné directement par la partie d'entraînement, et
un pignon final (43 ; 143 ; 243) solidaire en rotation avec la broche (43A ; 143A ; 243A),
dans laquelle, alors que la lame de coupe (7 ; 107 ; 207) est maintenue dans un état perpendiculaire à la face supérieure de la partie de base (2 ; 102 ; 202), une distance entre la partie de face inférieure (4E) du carter de pignons (4B) et la face supérieure de la partie de base (2 ; 102 ; 202) n'est pas inférieure à une distance entre la face d'extrémité latérale de la partie de base (2 ; 102 ; 202) de la bride (44 ; 144 ; 244) et la face supérieure de la partie de base (2 ; 102 ; 202),
**caractérisée en ce que** mécanisme de transmission (4D) comprend en outre :
une partie intermédiaire de pignons (42 ; 142 ; 242) respectivement en prise avec le premier pignon (41 ; 141 ; 241) et le pignon final (43 ; 143 ; 243), la partie intermédiaire de pignons (42 ; 142 ; 242) réduisant une rotation du premier pignon (41 ; 141 ; 241) et transmettant la rotation réduite au pignon final (43 ; 143 ; 243), et
une goupille de verrouillage (54) maintenue par le carter de pignons (4B) et mise en prise avec la partie intermédiaire de pignons (42 ; 142 ; 242).

2. Banc à scie selon la revendication 1, dans lequel le premier pignon (41) est disposé dans la partie d'entraînement et entraîné par une courroie (52B) ou une chaîne.

3. Banc à scie selon la revendication 1, dans lequel
la partie de support (3 ; 103 ; 203) comprend un mécanisme d'inclinaison supportant la partie de coupe (4 ; 104 ; 204) par rapport à la partie de base (2 ; 102 ; 202) de sorte que la partie de coupe (4 ; 104 ; 204) est inclinée dans une direction perpendiculaire à un côté de la lame de coupe (7 ; 107 ; 207),
le carter de pignons (4B) comprend une face inclinée (4F) opposée à la face supérieure de la partie de base (2 ; 102 ; 202) lorsque la lame de coupe (7 ; 107 ; 207) est inclinée, et
une partie d'ouverture (4a) pour actionner la goupille de verrouillage (54) est formée sur la face inclinée (4F).

4. Banc à scie (1) selon la revendication 3, dans lequel un couvercle (4G) pouvant être librement ouvert et fermé est disposé dans la partie d'ouverture (4a).

5. Banc à scie (1) selon la revendication 1, dans lequel la partie intermédiaire de pignons (42 ; 142 ; 242) comprend :
un deuxième pignon (42A ; 142A ; 242A) en prise avec le premier pignon (41 ; 141 ; 241), et
un troisième pignon (42B ; 142B ; 242B) fixé de manière concentrique au deuxième pignon (42A ; 142A ; 242A) et en prise avec le pignon final (43 ; 143 ; 243),
la goupille de verrouillage (54) étant mise en prise avec le deuxième pignon (42A ; 142A ; 242A).

6. Banc à scie (1) selon la revendication 1, dans lequel
alors que la partie de coupe (4 ; 104 ; 204) est amenée le plus proche possible de la partie de base (2 ; 102 ; 202) en étant déplacée par pivotement et que la lame de coupe (7 ; 107 ; 207) est maintenue dans un état perpendiculaire à la face supérieure de la partie de base (2 ; 102 ; 202), le premier pignon (41 ; 141 ; 241) est placé au niveau de la position la plus élevée et la plus éloignée de la lame de coupe (7 ; 107 ; 207) et le pignon final (43 ; 143 ; 243) est placé à la position la plus basse et est amené le plus proche possible de la lame de coupe (7 ; 107 ; 207),
la partie intermédiaire de pignons (42 ; 142 ; 242 est positionnée au niveau d'une partie intermédiaire entre le premier pignon (41 ; 141 ; 241) et le pignon final (43 ; 143 ; 243), et
les arbres rotatifs respectifs du premier pignon (41 ; 141 ; 241), de la partie intermédiaire de pignons (42 ; 142 ; 242) et du pignon final (43 ; 143 ; 243) sont positionnés sur le même axe (G) perpendiculaire à la face supérieure de la partie de base (2 ; 102 ; 202).

7. Banc à scie (1) selon la revendication 1, dans lequel
la partie d'entraînement comprend une partie d'arbre de sortie (251A) pour délivrer en sortie un couple,
le premier pignon (241) est un pignon conique et est fixé à la partie d'arbre de sortie (251A), et
la partie intermédiaire de pignons (242) comprend un pignon conique (242A) en prise avec le premier pignon (241).

8. Banc à scie (1) selon la revendication 7, dans lequel la partie d'entraînement est disposée de sorte que la partie d'arbre de sortie (251A) peut être positionnée entre le premier pignon (241) et la lame de coupe (207).

9. Banc à scie (1) selon la revendication 1, dans lequel la partie d'entraînement est disposée de manière à être horizontale, verticale ou inclinée par rapport à la direction axiale de la broche (43A ; 143A ; 243A).

10. Banc à scie (1) selon la revendication 1, dans lequel
la partie d'entraînement est disposée dans une partie supérieure de la partie de coupe (4),
une partie d'arbre de sortie (51A) de la partie d'entraînement est disposée sensiblement en parallèle avec la broche (43A), et
une rotation de la partie d'arbre de sortie (51A) est transmise au premier pignon (41) à travers une courroie (52B).

11. Banc à scie (1) selon la revendication 1 ou 2, dans lequel
le mécanisme de transmission (4D) comprend une section de transmission (52), le premier pignon (41) étant entraîné par la partie d'entraînement à travers la section de transmission (52), et
la section de transmission (52) comprend une première poulie (52A), et une seconde poulie (52C) reliées au premier pignon (41), la seconde poulie (52C) ayant un diamètre supérieur à celui de la première poulie (52A).

12. Banc à scie (1) selon la revendication 10, comportant en outre :
une première poulie (52A) reliée à la partie d'arbre de sortie (51A), et
une seconde poulie (52C) reliée au premier pignon (41), la seconde poulie (52C) ayant un diamètre supérieur à celui de la première poulie (52A),
dans lequel la rotation de la partie d'arbre de sortie (51A) est transmise au premier pignon (41) à travers la première poulie (52A), la courroie (52B) et la seconde poulie (52C).
